# EUROPÄISCHE PATENTSCHRIFT

(11) **EP 0 811 133 B1**
(45) Veröffentlichungstag und Bekanntmachung des Hinweises auf die Patenterteilung: **29.03.2000**
(21) Anmeldenummer: 95943230.3
(22) Anmeldetag: 29.12.1995
(51) Int. Cl.: F25B 17/08

(54) **SORPTIONSVORRICHTUNG**
SORPTION DEVICE
DISPOSITIF DE SORPTION

(43) Veröffentlichungstag der Anmeldung: 10.12.1997
(73) Patentinhaber: ELECTROLUX LEISURE APPLIANCES AG, 8500 Frauenfeld (CH)
(72) Erfinder: EBBESON, Bengt Electrolux Leisure Appliances AG, CH-8500 Frauenfeld (CH)
(74) Vertreter: Herrmann-Trentepohl, Werner, Dipl.-Ing.
(86) Internationale Anmeldenummer: EP9505166
(87) Internationale Veröffentlichungsnummer: WO9724564

(56) Entgegenhaltungen:
- EP-A- 0 151 237
- EP-A- 0 590 443
- DE-A- 3 229 646
- US-A- 4 169 362
- US-A- 5 279 359
- US-A- 5 408 847

## Beschreibung

Die Erfindung betrifft eine Sorptionsvorrichtung nach dem Oberbegriff des Anspruchs 1 bzw. 2 und 3.

Eine solche Sorptionsvorrichtung ist aus der EP 0590443 A1 bekannt. Mit derartigen Sorptionsvorrichtungen kann Wärme von einem ersten Wärmeträger auf einen zweiten Wärmeträger, der sich auf höherer Temperatur befindet, übertragen werden. Dabei wird ein Arbeitsmittel exotherm in einem Sorptionsmittel sorbiert und in einer endothermen Reaktion wieder desorbiert. Damit ist es möglich, durch Kühlen eines erwärmten Kocheradsorberteils bis in die Nähe der Außentemperatur und durch nachfolgendes Erwärmen über die Außentemperatur hinaus einem Kondensatorverdampferteil Wärme zu entziehen und diesen beispielsweise zum Kühlen eines Luftstroms zu verwenden.

Bei der bekannten Sorptionsvorrichtung weist das die Kocheradsorberteile umschließende Gehäuse nur einen Zutritt und einen Auslaß für das gasförmige Wärmeträgermediumn auf, welches auf seinem Strömungsweg den Kocheradsorberteilen sowohl Wärme entzieht als auch Wärme zuführt. Das Wärmeträgermedium - im allgemeinen Luft - wird dabei in der Drehrichtung der Sorptionsbehälter entgegengesetzter Richtung durch das Gehäuse geführt und strömt abwechslend radial von außen nach innen und von innen nach außen an den Kocheradsorberteilen entlang. Zur Führung des Wärmeträgermediums sind in dem Gehäuse axial verlaufende Stege vorgesehen, die bis an die äußere und die innere Kreisbahn der Sorptionsbehälter reichen und innen und außen gegeneinander versetzt sind.

Die bekannte Sorptionsvorrichtung arbeitet mit einem für derartige Vorrichtungen sehr guten Wirkungsgrad, insbesondere wenn die in den Sorptionsbehältern enthaltenen Sorptionsstoffe aus Zeolith und Wasser bestehen und die Sorptionsbehälter, wie bei der bevorzugten Ausführungsform der bekannten Vorrichtung vorgesehen, als langgestreckte flache Hohlkörper ausgebildet und im Querschnitt gekrümmt sind. Bei der Verwendung von Zeolith zur Absorption von Wasser entsteht in den Sorptionsbehältern kein übermäßig hoher Druck, der die Ausbildung der Sorptionsbehälter mit verhältnismäßig großen Außenflächen zuläßt. Enthalten die Sorptionsbehälter dagegen Ammoniak, das vom flüssigen in den gasförmigen Aggregatzustand und umgekehrt wechselt, sowie ein oder mehrere das Ammoniak absorbierende unterschiedliche Salze, so herrscht in den Sorptionsbehältern ein höherer Druck. Die bekannten, mit einem Profil ähnlich einem Tragflächenprofil gestalteten Sorptionsbehälter sind zur Aufnahme höherer Drücke nicht besonders geeignet, da die Oberfläche im Verhältnis zur Querschnittsfläche zu groß ist. Unter technischen Gesichtspunkten ist die Verwendung eines kreisförmigen Querschnitts am besten. Dabei ergeben wenige Rohre mit einem großen Durchmesser ein besseres wirtschaftliches Verhältnis als zahlreiche Rohre mit kleinem Durchmesser, da das Gewicht reduziert werden kann. Allerdings ist der Wirkungsgrad bei der Verwendung vieler kleiner Rohre günstiger, so daß ein Optimum für jeden Einzelfall zu ermitteln ist.

Bei der eingangs genannten bekannten Vorrichtung ist zwischen den Stegen und der Außen- bzw. Innenkante der Sorptionsbehälter zwangsläufig ein schmaler Spalt vorhanden, durch den ein kleiner Teil des Wärmeträgermediums in den benachbarten Raum übertreten kann, anstatt den vorgesehenen Weg radial zwischen den Sorptionsbehältern hindurch zu nehmen. Dieser Kurzschlußstrom kann bei der bekannten Vorrichtung vernachlässigt werden, weil er bei der Vielzahl der Sorptionsbehälter nicht ins Gewicht fällt, zumal der Spalt ständig von mindestens zwei Sorptionsbehältern abgedeckt wird. Werden dagegen weniger Sorptionsbehälter mit größerem Umfangsabstand vorgesehen, so kann bei der bekannten Ausführungsform eine nicht mehr unbeträchtliche Menge des Wärmeträgermediums zwischen den Stegen und den Rändern der Sorptionsbehälter durchtreten, wodurch eine merkliche Verschlechterung des Wirkungsgrades erfolgt.

Bei der bekannten Sorptionsvorrichtung besteht ferner die Einrichtung zum Erwärmen des gasförmigen Wärmeträgermediums aus einem Brenner, vorzugsweise einem Gasbrenner, der in dem die Kocherabsorberteile umschließenden Gehäuse angeordnet ist. Die von dem Brenner erzeugten Verbrennungsgase werden dem Wärmeträgermedium zugemischt und vergrößern dadurch dessen Volumen. Die Menge des in das Gehäuse eingeleiteten Wärmeträgermediums muß entsprechend bemessen sein, so daß in dem vor dem Brenner liegenden Strömungsbereich eine kleinere Gasmenge mit entsprechend geringerer Strömungsgeschwindigkeit vorhanden ist. Damit werden die austauschbare Wärmemenge und der erzielbare Wirkungsgrad begrenzt.

Aus der US-A-4169362 ist es bekannt, bei einer rotierenden Sorptionsvorrichtung einzelne Ströme des Wärmeträgermediums durch Dichtungen gegeneinander abzudichten, wobei diese Dichtungen ortsfest angeordnet sind und nicht verbiegbar sind.

Der Erfindung liegt die Aufgabe zugrunde, den Wirkungsgrad der eingangs genannten Sorptionsvorrichtung zu verbessern und insbesondere die zwischen den Sorptionsbehältern und dem Wärmeträgermedium auszutauschende Wärmemenge zu erhöhen.

Die Lösung der Aufgabe erfolgt mit den Merkmalen des Anspruchs 1 oder 2 oder 3.

Von Bedeutung ist, daß der ringförmige Spalt zwischen den rotierenden Sorptionskörpern und den Gehäuseteilen wirkungsvoll abgedichtet wird. Dabei werden verschiedene Methoden bevorzugt vorgeschlagen, wobei einerseits die Gehäuseteile fest sind und sich nur der Rotor mit den Sorptionsbehältern dreht, während andererseits die dem Rotor benachbarten Gehäuseteile als drehbare Ringelemente ausgebildet sind, welche sich mit dem Rotor schrittweise mitbewegen und nach einer kurzen Stillstandsphase zurückgleiten. Es kann auch vorgesehen sein, daß sich der Rotor schrittweise an den festen Gehäuseteilen vorbeibewegt und die Gasdurchleitung in der Stillstandsphase des Rotors erfolgt.

Durch die Anordnung von Lippen, die in den Strömungskanälen bis an die Ränder der Sorptionsbehälter reichen, wird sichergestellt, daß das Wärmeträgermedium vollständig radial von außen nach innen und umgekehrt geleitet wird, so daß keine Übertragungsverluste auftreten können.

Die Lippen verbiegen sich bei sich fortbewegendem Sorptionsbehälter, bis sie zurückschnappen und sich an den Rand des nächstfolgenden Sorptionsbehälters anlegen. Sie können jedoch in einer bevorzugten Ausführungsform auch mit den Sorptionsbehältern in Drehrichtung mitbewegt werden und nach einer bestimmten Wegstrecke sich zurückbewegen, um den nächsten Sorptionsbehälter abzudichten.

Wenn die Sorptionsbehälter wegen des höheren Innendruckes einen kreisförmigen oder ovalen Querschnitt erhalten, werden sie zweckmäßig zur besseren Wärmeübertragung mit Rippen versehen. Die Rippen verlaufen quer zur Längsrichtung der Sorptionsbehälter, d.h. radial zu deren gemeinsamer Drehachse, und sind vorzugsweise so gestaltet, daß sie radial verlaufende Strömungskanäle für das gasförmige Wärmeträgermedium bilden. Diese Strömungskanäle werden jeweils durch die Lippen gegen die benachbarten Strömungskanäle abgedichtet.

Die Sorptionsbehälter sind bevorzugt als Rohre mit kreisförmigem oder ovalem Querschnitt ausgebildet. Sie können jeweils ein durchgehend längsverlaufendes Rohr darstellen, welches an seinem einen Ende einen Kocheradsorberteil und an seinem anderen Ende einen Kondensatorverdampferteil aufweist.

Die Rohre können auf einer Kreisbahn nebeneinander angeordnet sein oder aber auf mehreren konzentrischen Kreisbahnen der Art, daß in radialer Richtung mehrere Rohre von innen nach außen angeordnet sind. Beispielsweise können die Kocheradsorberteile und die Kondensatorverdampferteile der konzentrisch zueinander angeordneten Kreise der Rohre mit unterschiedlichen Salzen gefüllt sein. Es hat sich dabei als zweckmäßig herausgestellt, wenn die Kocheradsorberteile des äußeren Rohrkreises mit Manganchlorid, des mittleren Rohrkreises mit Strontiumchlorid und des inneren Rohrkreises mit Bariumchlorid gefüllt sind. Auch eine Mischung aus diesen 3 Salzen ist vorteilhaft, wobei die Salzkristalle in ein Basismaterial, wie z.B. Graphitmaterial eingelagert sein können. Die Luft wird dann zweckmäßig so geführt, daß die heißeste Luft zunächst den mit Manganchlorid gefüllten Kocheradsorberteilen zugeleitet wird und, nachdem sie sich etwas abgekühlt hat, den mittleren Strontiumadsorberteilen, und nachdem sie sich weiter abgekühlt hat, den inneren Bariumchloridadsorberteilen. Hierbei ist es denkbar, daß jeweils 3 nebeneinanderliegende Sektoren gleichzeitig durchströmt werden, die jeweils den gleichen Aufbau haben können. Es ist auch denkbar, daß die auf einem Kreis nebeneinanderliegenden Kocheradsorberteile mit unterschiedlichen Salzen gefüllt sind und daß die Rohrgruppe schrittweise um die Rotorachse bewegt wird.

Als Einrichtung zum Erwärmen des gasförmigen Wärmeträgermediums kann ein Heizrohr vorgesehen werden, das parallel zu den Sorptionsbehältern außerhalb von deren Drehkreis angeordnet ist. Bei dem Heizrohr handelt es sich um ein geschlossenes System, welches teilweise mit einem Wärmeträgermedium gefüllt ist, insbesondere mit Wassser. Beim Erhitzen verdampft das Wasser in dem Heizrohr und verteilt die Wärme gleichmäßig auf das ganze Rohr und von dort über Rippen an seine Umgebung. Die Sorptionsbehälter sowie die diese aufnehmenden Gehäuse werden in diesem Fall übereinander angeordnet.

Wenn zum Erzeugen des Heizgases ein Brenner dient, kann dieser am unteren bzw. freien Ende des Heizrohres, angrenzend an die äußere Wand des die Kondensatorverdampferteile aufnehmenden Gehäuses angeordnet sein.

Entlang dem Heizrohr wird das Heizgas, beispielsweise das Verbrennungsgas des Brenners oder das Abgas eines Verbrennungsmotors geleitet, um über Wärmetauscherrippen das in dem Gehäuse für die Kocherabsorberteile strömende Wärmeträgermedium aufzuheizen. Die Menge des Wärmeträgermediums wird auf diese Weise nicht vergrößert. Die Abgase werden einem Wärmetauscher zugeleitet, bevor sie über einen Schornstein in die Atmosphäre austreten, so daß auch hier eine Wärmerückgewinnung stattfindet.

Innerhalb der von den Rohrkreisen gebildeten umlaufenden Sorptionsbehälter ist wenigstens ein Querstromgebläse, jedoch bevorzugt sind auf den Umfang verteilt wenigstens 4 Querstromgebläse angeordnet, die für einen gesteuerten Luftstrom in radialer Richtung zur Mittelachse bzw. nach außen sorgen, so daß die Sorptionsbehälter gleichmäßig von der Arbeitsluft durchströmt werden. Querstromgebläse können aber auch zusätzlich oder alternativ außerhalb des Rotors angeordnet sein.

Nach einer vorteilhaften Ausgestaltung der Erfindung ist der um die Drehachse angeordnete Kern der Sorptionsvorrichtung mit einer Isolierung versehen, damit vermieden wird, daß über den Kern größere Wärmeströme zu den einzelnen Kammern geleitet werden, was den Wirkungsgrad schmälern würde.

Nachfolgend wird die Erfindung anhand verschiedener möglicher Ausführungsformen unter Bezugnahme auf die Zeichnung näher erläutert. Es zeigen:
- Fig.1: eine perspektivische Außenansicht einer Sorptionsvorrichtung mit zwei koaxial angeordneten Gehäusen;
- Fig. 2: einen Querschnitt durch das die Kocherabsorberteile enthaltende Gehäuse;
- Fig.2a: einen Teilschnitt durch eine Sorptionsvorrichtung, bei der die an den Rotor angrenzenden Gehäuseteile als drehbare Ringe ausgebildet sind;
- Fig. 3: eine schematische perspektivische Teilansicht eines Sorptionsbehälters;
- Fig. 4: einen Querschnitt durch einen weiteren Sorptionsbehälter;
- Fig. 5: eine Teilansicht von nebeneinander angeordneten Sorptionsbehältern in radialer Richtung von außen gesehen;
- Fig. 6: einen Längsschnitt durch drei nebeneinander in einer Kreisbahn liegende Sorptionsbehälter;
- Fig. 7: einen Schnitt durch einen Rotor mit nebeneinander und radial zueinander angeordneten Sorptionsbehältern;
- Fig. 8: eine geschnittene Draufsicht auf ein Ausführungsbeispiel der Sorptionsvorrichtung, bei dem Querstromgebläse vorgesehen sind, und
- Fig. 9: eine perspektivische Ansicht der Einrichtung zum Erwärmen des Wärmeträgermediums, bei der ein Heizrohr vorgesehen ist.

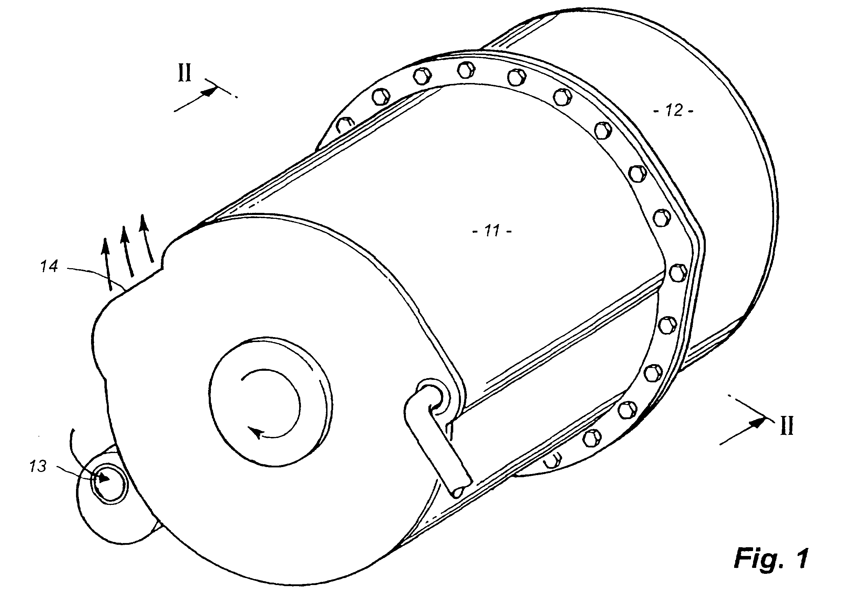

Die erfindungsgemäße Sorptionsvorrichtung ist äußerlich ähnlich aufgebaut wie die eingangs erläuterte bekannte Vorrichtung, wobei bei der in Fig. 1 dargestellten Ausführungsform zwei koaxiale Gehäuse vorgesehen sind, von denen das Gehäuse 11 die Kocherabsorberteile der Sorptionsbehälter aufnehmen, während sich in dem Gehäuse 12 die Kondensatorverdampferteile befinden, wie dies später noch näher erläutert wird.

An dem Gehäuse 11 ist ein Luftzutritt 13 vorgesehen, in den Umgebungsluft durch ein Radialgebläse angesaugt und durch das Gehäuse zu einem Luftauslaß 14 gefördert wird. Es könnten aber auch andere Gebläsearten verwendet werden, wie beispielsweise ein oder mehrere Querstromgebläse an der Außen- und/ oder Innseite der Sorptionsbehälter. Radial ungefähr dem Gebläse gegenüberliegend ist in dem Gehäuse 11 eine Heizeinrichtung zum Erwärmen der Luft angeordnet.

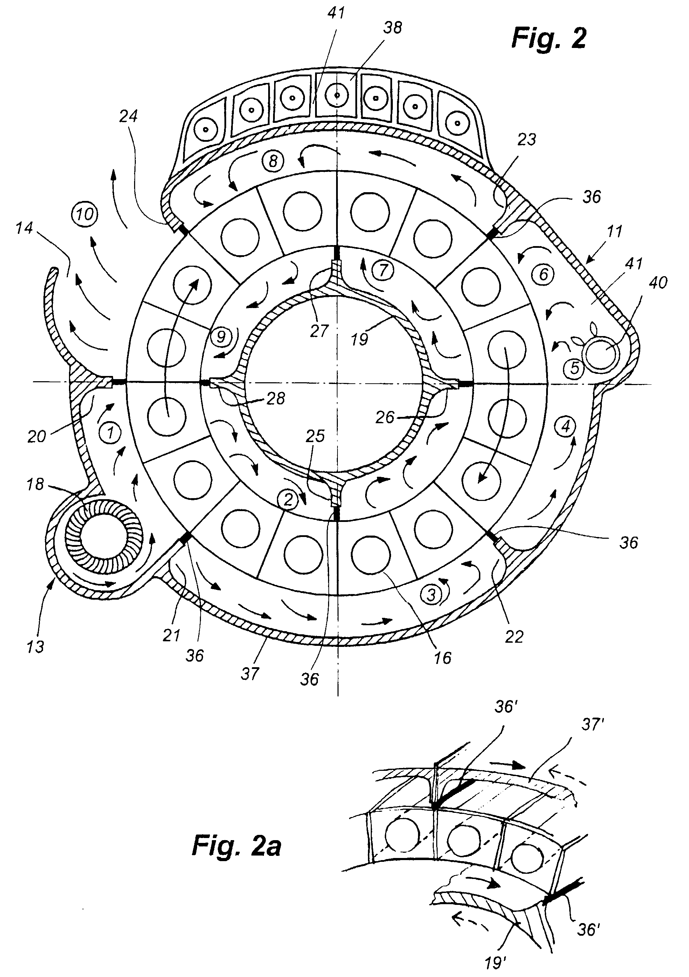

Im Inneren der Gehäuse befindet sich ein Rotor, der die Gehäuse axial durchsetzt und aus mehreren rohrförmigen Sorptionsbehältern 16 besteht, die kreisringförmig aneinandergrenzend angeordnet sind und in der Darstellung von Fig. 2 als ganzes rechtsherum umlaufen. Die Umlaufgeschwindigkeit liegt dabei im Bereich von einer Umdrehung in drei bis fünf Minuten.

Die Zu- und Ableitung der Wärme an den Außenflächen der Kocherabsorberteile der Sorptionsbehälter 16 erfolgt durch einen Luftstrom, der durch den Lufteinlaß 13 in das Gehäuse 11 eintritt und durch ein Radialgebläse 18 gefördert wird.

Die Hauptströmungsrichtung der Luft verläuft dabei entgegen dem Uhrzeigersinn. Die Außenwand des Gehäuses und die innere Wand sind von den Sorptionsbehältern 16 beabstandet, so daß in Umfangsrichtung verlaufende Strömungskanäle für die als Wärmeträgermedium dienende Luft entstehen. An der Außenwand sind nach innen weisende, längsverlaufende Stege 20, 21, 22, 23, 24 ausgebildet, an denen der Luftstrom radial nach innen umgelenkt wird. Die Innenwand trägt entsprechende, nach außen weisende Stege 25, 26, 27, 28, die gegenüber den Stegen 20 bis 24 in Umfangsrichtung versetzt sind und den Luftstrom radial nach außen lenken.

Der durch das Gebläse 18 zugeführte Luftstrom nimmt den durch Pfeile angedeuteten Weg. Er tritt im Bereich (1) in das Gehäuseinnere ein und wird durch die Stege 20, 21 bei (1) etwa radial nach innen, durch den Steg 25 bei (2) wieder radial nach außen geleitet. Dabei nimmt er die in den Kocherabsorberteilen entstehende Sorptionswärme auf.

Anschließend kommt die Luft mit den Kocherabsorberteilen in Kontakt, die im Desorptionsbereich erhitzt worden sind. Durch den Steg 22 wird die Luft bei (3) nach innen und durch den Steg 25 in Umfangsrichtung entgegen dem Uhrzeigersinn weitergeleitet. Sie nimmt dabei weitere Wärme auf, während die erhitzten Kocherabsorberteile abgekühlt werden.

Am Steg 26 erfolgt eine erneute Umlenkung nach außen, so daß die Luft bei (4) wieder in den äußeren Strömungskanal kommt. Bei (5) wird sie durch die Heizeinrichtung 40 erhitzt und kommt damit auf ein höheres Wärmeniveau als die Kocherabsorberteile. Die heiße Luft wird bei (6) durch den Steg 23 nach innen und bei (7) durch den Steg 27 wieder nach außen geleitet und gibt ihre Wärme an die Kocherabsorberteile ab, in denen dadurch das vorher sorbierte Sorptionsmittel desorbiert bzw. ausgetrieben wird.

Bei (8) erfolgt eine Ablenkung nach innen und bei (9) wiederum nach außen zum endgültigen Austritt bei (10). Im Bereich dieses Strömungsteils gibt die Luft ihre Restwärme an die Kocherabsorberteile ab, die gekühlt aus dem Sorptionsbereich kommen und damit zur Desorption vorgewärmt werden. Dadurch hat die Luft am Auslaß 14 nur eine geringfügig höhere Temperatur als am Eintritt 13, so daß im Bereich der Kocherabsorberteile nur ein geringer Wärme- und damit Energieverlust auftritt. Wenn die erwärmte Luft durch den Bereich (8) strömt, dann wird ein Teil der in dieser Luft enthaltenen Wärmemenge durch die Wand des Gehäuses 11 und über in dem Kanal 38 ausgebildete Rippen 41 an die durch den Kanal 38 strömende Luft abgegeben. Diese Luft kann in einer vor dem Gehäuseteil 11 angewordneten, nicht dargestellten Trocknungseinrichtung für die Eintrittsluft getrocknet werden.

Die erfindungsgemäße Sorptionsvorrichtung kann mit verschiedenen Sorptionsmitteln betrieben werden. So kann in den Kocherabsorberteilen eine Füllung aus einem Zeolith vorhanden sein, das bei Normaltemperatur Wasserdampf sorbiert, so daß das in den Kondensatorverdampferteilen enthaltene Wasser bei niedriger Temperatur verdampft. Die aus der Umgebung aufgenommene Verdampfungswärme kann dabei zur Kühlung von Luft verwendet werden. Andererseits können die Sorptionsbehälter auch Ammoniak enthalten, das von einem, zwei oder drei verschiedenen Salzen oder einer Mischung derselben sorbiert und wieder desorbiert wird. Die mit Ammoniak gefüllten Sorptionsbehälter stehen dabei unter einem höheren Druck.

Für die Sorptionsbehälter besteht somit die Forderung, daß sie einerseits dem Innendruck standhalten und absolut dicht bleiben müssen, andererseits den Übergang möglichst große Wärmemengen zwischen ihrem Inneren und dem Außenraum ermöglichen sollen. Während für einen guten Wärmeübergang eine große Wandfläche mit geringer Wandstärke vorteilhaft ist, erfordert die Druckfestigkeit eine möglichst kleine Oberfläche und/oder eine dickere Wandung. Diesen sich widersprechenden Forderungen werden die in den Fig. 2 bis 4 dargestellten Sorptionsbehälter gerecht.

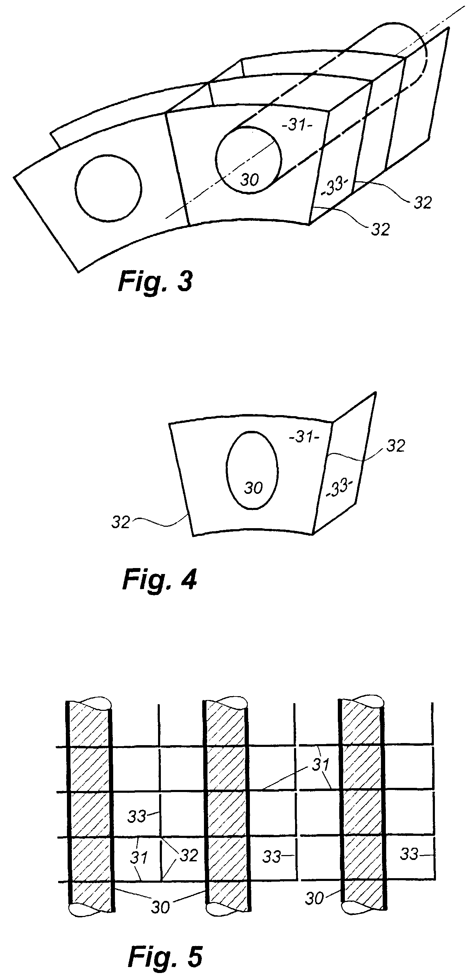

Gemäß Fig. 3 ist jeder Sorptionsbehälter 16 als Rohr 30 ausgebildet, das mit sich radial erstreckenden flächigen Rippen 31 versehen ist. Anstelle des in Fig. 3 gezeigten kreisförmigen Rohrquerschnittes kann der Querschnitt des Rohres auch oval oder elliptisch sein, wie aus Fig. 4 ersichtlich. Die Rippen 31 sind in gleichmäßigen Abständen über die gesamte Länge des Rohres 30 angeordnet.

Jede Rippe 31 hat angenähert die Form eines gleichschenkligen Trapezes. Die beiden nicht parallelen Seitenkanten 32 verlaufen dabei in Radialrichtung zu der gemeinsamen Drehachse aller Sorptionsbehälter 16. Von diesen Seitenkanten ist dabei eine in der Weise gebildet, daß aus der Trapezfläche ein Seitenstreifen 33 um 90° abgewinkelt ist. Fig. 4 zeigt die ursprünglich Form der die Rippe 31 bildenden Fläche und Fig. 3 die Rippen mit den abgebogenen Seitenstreifen 33, die aneinanderstoßen. Die Breite der Seitenstreifen 33 entspricht dem gegenseitigen Abstand der Rippen 31 auf dem Rohr 30, so daß sich geschlossene Strömungskanäle ergeben, die radial zur gemeinsamen Drehachse der Sorptionsbehälter verlaufen. Die in der Fig.5 gezeigte Draufsicht läßt mehrere Strömungskanäle erkennen, die gegeneinander abgegrenzt sind.

Da die Sorptionsbehälter 16 auf einem Kreisring nebeneinander angeordnet sind, reicht es auch aus, wenn nur eine Seitenkante des die Rippen bildenden Trapezes abgewinkelt ist und der gegenüberliegende Zwischenraum zwischen zwei hintereinander liegenden Rippen von dem Seitenstreifen der benachbarten Rippe abgedeckt ist. Diese Ausbildung der Rippen 31 ist in Fig. 5 dargestellt.

Die beiden parallelen Kanten des die Rippe 31 bildenden Trapezes sind nicht genau geradlinig, sondern etwas gekrümmt, und zwar mit den Radien der den Sorptionsbehältern gemeinsamen Drehachse. Die aneinander angrenzenden Rippen benachbarter Sorptionsbehälter bilden auf diese Weise Trennwände in Form einer Kreisscheibe, wobei die abgewinkelten Seitenstreifen für jeden Sorptionsbehälter eigene, in Radialrichtung verlaufende Strömungskanäle abteilen, die in Fig. 5 als Rechtecke zu erkennen sind.

Die Stege 20 bis 28 tragen an ihren den Sorptionsbehältern zugewandten freien Kanten axial verlaufende Lippen 36, mit denen die einzelnen Strömungsbereiche voneinander getrennt sind, so daß durch ein Vorbeiströmen der Luft in Umfangsrichtung an den Sorptionsbehältern vorbei keine Wärmeübergangsverluste auftreten können.

Es ist möglich, die Stege selbst als Lippen mit einer solchen Breite auszubilden, daß sie unter elastischer Verbiegung vom Rand des angrenzenden Sorptionsbehälters mitgenommen werden, bis dieser die Lippe passiert hat und sie zur Anlage an den nächstfolgenden Sorptionsbehälter zurückschnappen.

Eine andere Möglichkeit der ständigen Abdichtung ist in Fig. 2a gezeigt. Die Lippen 36' bzw. die sie tragenden Stege befinden sich hier an einem gesonderten Ring 37' oder einer Hülse, die begrenzt drehbar um die gemeinsame Drehachse der Sorptionsbehälter in dem Gehäuse gelagert ist. In einer Stellung, in der die Lippen 36' mit den von den Seitenstreifen 33 der Rippen 31 gebildeten Trennwänden der Strömungskanäle ausgerichtet sind, wird der Ring 37' mit gleicher Richtung und Geschwindigkeit wie die Sorptionsbehälter gedreht, so daß die Lippen ihre Lage gegenüber den Rippen beibehalten. Wenn sich die Sorptionsbehälter um die Breite eines Behälters weiter bewegt haben, wird der Ring schnell zurückgedreht, um den nächstfolgenden Strömungskanal an jeder Lippe abzudichten.

Auf diese Weise wird praktisch die gesamte durch das Gehäuse strömende Luft radial an den Sorptionsbehältern vorbeibewegt.

Ein gleicher Ring 19' kann auch an der Innenseite der Sorptionsbehälter vorgesehen sein.

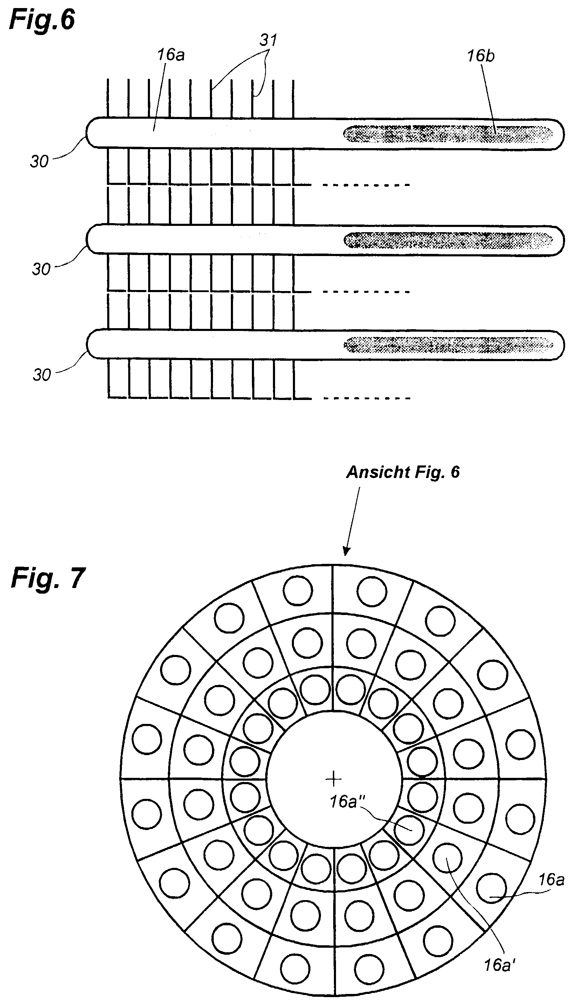

Wie bereits erwähnt, weisen bei bestimmten, mit Ammoniak arbeitenden Ausbildungsformen die Sorptionsbehälter einen Kocherabsorberbereich und einen Kondensatorverdampferbereich auf, die jeweils ein Salz mit unterschiedlicher Affinität gegenüber Ammoniak enthalten. Fig. 6 zeigt einen solchen Sorptionsbehälter mit drei nebeneinander liegenden Rohren mit den Bereichen 16a und 16b.

Die Fig.7 zeigt einen Querschnitt ähnlich der Fig.2 durch einen Rotor, bei welchem drei rohrförmige Sorptionsbehälter radial zueinander in konzentrischen Kreisen angeordnet sind. Im Bereich 16a befindet sich beispielsweise Manganchlorid (hohe Ammoniakaffinität), im Bereich 16a' Strontiumchlorid (mittlere Affinität) und im Bereich 16a" Bariumchlorid (geringe Affinität). Derart aufgebaute Sorptionsbehälter werden in die aus zwei Gehäusen 11 und 12 bestehende Vorrichtung gemäß Fig. 1 eingesetzt, wobei sich die Bereiche 16a, 16a' und 16a" im Gehäuse 11 und der Bereich 16b im Gehäuse 12 befinden.

Die Einrichtung zum Erwärmen der strömenden Luft in dem die Kocherabsorberteile umschließenden Gehäuse kann, wie bekannt, als Brenner ausgebildet sein. Die entstehenden Verbrennungsgase vergrößern dabei das umlaufende Gasvolumen, so daß hinter dem Brenner eine größere Gasmenge vorhanden ist als davor. Dies führt zu einer höheren Luftgeschwindigkeit und einem größeren Druckabfall, so daß ein erhöhter Druck erforderlich ist, um die Gasströmung aufrecht zu erhalten. Damit ist der Nachteil erhöhter Leckagen an den Abdichtungen zwischen Rotor und Gehäuse auch im Bereich der stirnseitigen Gehäuseteile verbunden. Außerdem enthalten die Verbrennungsgase große Mengen an Wasserdampf, der auskondensieren und zur Korrosion von Gehäuseteilen führen kann.

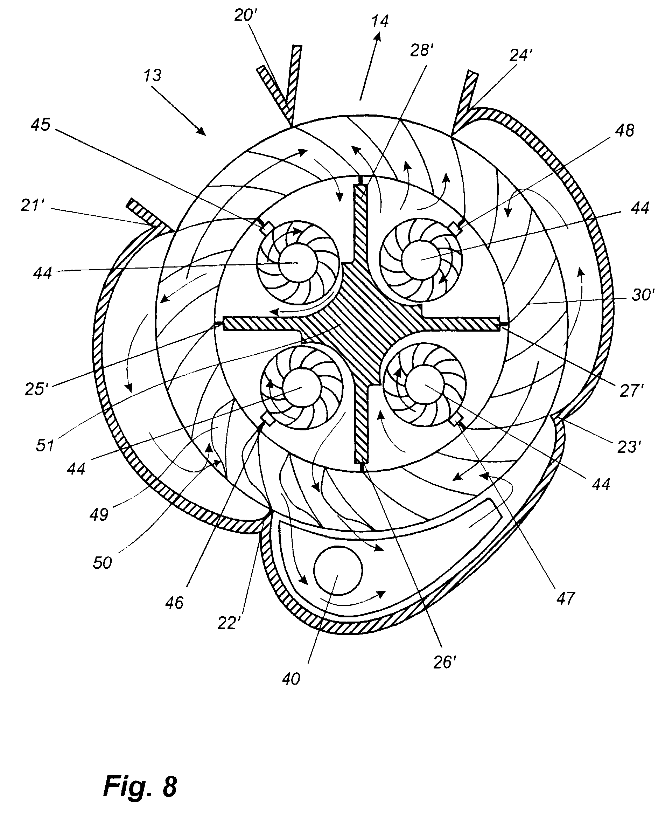

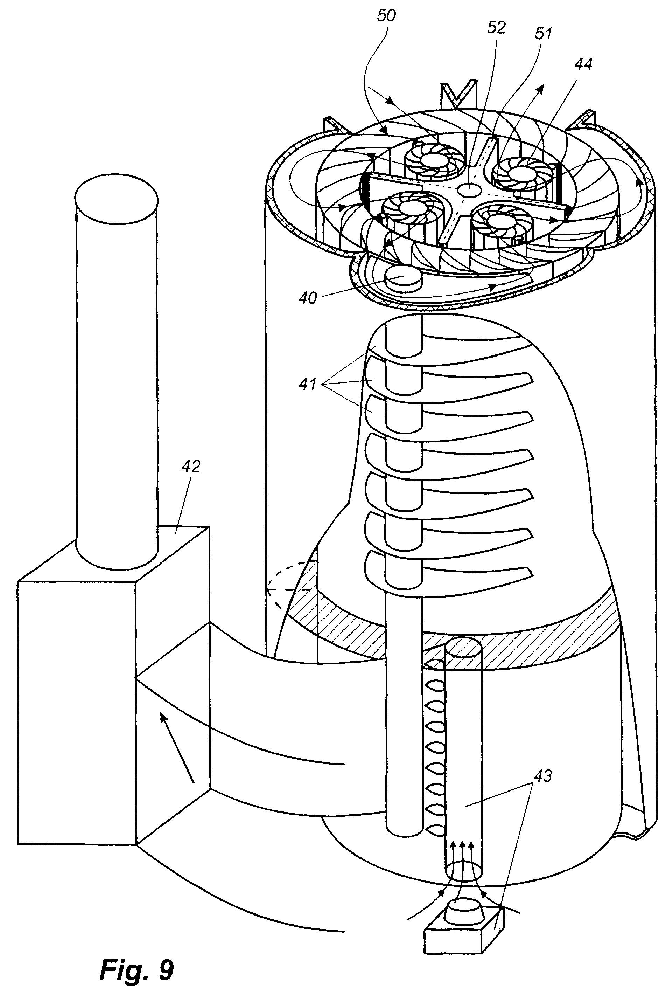

Um diese Auswirkungen des Brenners zu vermeiden, kann entsprechend den Fig. 8 und 9 anstelle eines Brenners ein Heizrohr 40 vorgesehen werden. Das Heizrohr 40 ist mit Rippen 41 versehen, die im Bereich (5) der umlaufenden Luft liegen und die durch das Heizrohr 40 zugeführte Wärme an die Luft übertragen.

Die zu übertragende Wärme kann auf unterschiedliche Weise in das Heizrohr 40 eingeleitet werden. So kann ein von der Vorrichtung getrennter Brenner vorgesehen sein, dessen Wärmeenergie über einen Zylinderkörper, welcher mit einem Wärmeträgermedium teilweise gefüllt ist, gleichmäßig an die Sorptionsbehälter abgegeben wird. Die Abwärme kann in einem Wärmetauscher 42 teilweise zur Vorwärmung wieder zurückgewonnen werden, bevor die Abgase in die freie Atmosphäre austreten.

Eine andere Möglichkeit besteht darin, den Wärmeerzeuger in der Verlängerung des Heizrohrs 40 an dem die Kondensatorverdampferteile enthaltenden Gehäuse 12 anzubringen, das damit in der Außenkontur an das Gehäuse 11 angepaßt werden kann. Bei dieser Ausführungsform sind die Gehäuse 11 und 12 zweckmäßigerweise übereinander oder in gegenüber der Vertikalen geneigter Stellung angeordnet. Der Wärmeerzeuger kann dann als Brenner 43, beispielsweise als Gasbrenner, ausgebildet sein, dessen Verbrennungsgase an dem Heizrohr 40 entlanggeleitet werden und dabei die darin enthaltene Wärme über die Rippen 41 an die die Kocherabsorberteile umströmende Luft abgeben.

Beim Einsatz der Sorptionsvorrichtung in einem Kraftfahrzeug können auch die heißen Abgase des Motors ganz oder teilweise entlang dem Heizrohr geführt werden, so daß deren Wärmeinhalt ausgenutzt wird.

Zur Erzeugung eines gleichmäßigen Luftstromes zwischen den Sorptionsbehältern hindurch sind innerhalb des von den Sorptionsbehältern erzeugten Rotors mehrere Querstromgebläse 44 vorgesehen, vorzugsweise vier, die auf den Umfang gleichmäßig verteilt sind.

Durch die Anordnung von mehreren Querstromgebläsen 44 wird auf der Saugseite eines Querstromgebläses 44 jeweils ein Unterdruck und auf der Druckseite ein leichter Überdruck erzeugt. Der Luftstrom durchläuft auf dem Weg durch den Sorptionsbehälter dabei einen sägezahnartigen Druckverlauf, d.h. beim Eintritt in den Sorptionsbehälter fällt der Druck bis zur Saugseite des ersten Querstromgebläses 44 leicht ab, steigt dann nach dem Querstromgebläse auf einen höheren Druck wieder an, der wiederum bis zur Saugseite des nächsten Querstromgebläses 44 abfällt und durch das nächste Querstromgebläse 44 wieder erhöht wird.

Die vier dauerhaft laufenden Querstromgebläse 44 sorgen für ein kontrolliertes Durchströmen der Sorptionsvorrichtung, wobei die Gebläse eine unterschiedliche Umdrehungszahl haben können, die entsprechend an das Luftvolumen angepaßt ist. Beim Lufteinlaß 13 besitzt die Luft Umgebungstemperatur und ist daher noch relativ kalt. Durch die Lufterwärmung beim Durchströmen des aufgeheizten Rotors dehnt sich die Luft aus, so daß das zweite Querstromgebläse 44 ein größeres Luftvolumen zu bewältigen hat und daher auch eine höhere Drehzahl besitzen muß. Analog müssen auch das dritte und vierte Querstromgebläse 44 an das zu bewältigende Luftvolumen angepaßt werden. Die unterschiedlichen Drehzahlen lassen sich durch Riementriebe mit entsprechenden Übersetzungsverhältnissen erreichen. Es sind jedoch auch andere bekannte Antriebs formen möglich.

An den vier Querstromgebläsen 44 ist jeweils eine Gebläsewand 45, 46, 47 und 48 angeordnet. Jede Gebläsewand 45, 46, 47 und 48 besitzt eine Dichtlippe, die an dem schaufelförmig ausgebildeten Rohr 30' anliegt. Dabei sind die Dichtungen an den Gebläsewänden 25'bis 28'in Fig.8 besonders genau gearbeitet, da in diesem Bereich durch das Querstromgebläse 44 jeweils ein Druckgefälle erzeugt wird und ein Leck sich daher besonders negativ auf den Wirkungsgrad der Anlage auswirken würde. Die anderen Dichtungen an den äußeren Stegen 20'. 21', 22', 23' und 24' sowie an den inneren Stegen 25', 26', 27' und 28' sind ähnlich wie bei dem vorhergehenden Ausführungsbeispiel erläutert ausgeführt.

Wenn die Dichtlippen radial verschiebbar in den Stegen gelagert sind, könnte in der Achse des Gehäuseteiles 51 eine Steuereinrichtung 52 vorgesehen sein, welche die Dichtungen radial nach außen drückt, beispielsweise wenn die Relativgeschwindigkeit zwischen Rotor und Dichtungen bei schrittweiser Bewegung Null ist.

### Bezugszeichenliste

- 11: Gehäuse
- 12: Gehäuse
- 13: Lufteinlaß
- 14: Luftauslaß
- 16: Sorptionsbehälter
- 16a, 16a', 16a": Rohrteile
- 16b: Rohrteile
- 18: Radialgebläse
- 20, 20': Äußerer Steg
- 21, 21': Äußerer Steg
- 22, 22': Äußerer Steg
- 23, 23': Äußerer Steg
- 24, 24': Äußerer Steg
- 25, 25': Innerer Steg
- 26, 26': Innerer Steg
- 27, 27': Innerer Steg
- 28, 28': Innerer Steg
- 30: Rohr
- 31: Rippen
- 32: Kanten
- 33: Seitenstreifen
- 36: Lippen
- 38: Kanal
- 40: Heizrohr
- 41: Rippen
- 42: Wärmetauscher
- 43: Brenner
- 44: Querstromgebläse
- 45: Gebläsewand
- 46: Gebläsewand
- 47: Gebläsewand
- 48: Gebläsewand
- 49: Sorptionsbehälter
- 50: Rotor
- 51: Gehäuseteil
- 52: Steuereinrichtung

## Patentansprüche

1. Sorptionsvorrichtung zur Verwendung in einer Kühlanlage, einem Klimagerät, einer Wärmepumpe o.dgl.,
- mit mehreren langgestreckten Sorptionsbehältern (16), die über einen Teil ihrer Länge mit Sorptionsstoffen gefüllt sind und in diesem Teil eine Kocheradsorberzone bilden und deren anderer Teil der Länge eine Kondensatorverdampferzone bildet,
- mit mindestens zwei koaxialen Gehäusen (11, 12), in denen die Sorptionsbehälter achsparallel auf einer Kreisbahn rotierend angeordnet sind und sich dabei mit dem Kocheradsorberteil in dem einen Gehäuse und mit dem Kondensatorverdampferteil in einem anderen Gehäuse befinden,
- mit Einrichtungen zum Zuführen von gasförmigen Wärmeträgermedien, insbes. Luft an die Außenflächen der rotierenden Sorptionsbehälter (16) in jedem der Gehäuse,
- mit einer Einrichtung (40, 41) zum Erwärmen des gasförmigen Wärmeträgermediums in dem die Kocheradsorberteile der Sorptionsbehälter umschließenden Gehäuse, und
- mit zur Führung des Wärmeträgermediums dienenden, axial verlaufenden Stegen (20 bis 28'), die in den Gehäusen radial von außen nach innen und umgekehrt gerichtet vorgesehen sind und im wesentlichen bis an die äußere und die innere Kreisringbahn der Sorptionsbehälter (16) reichen und außen und innen gegeneinander versetzt sind,
**dadurch gekennzeichnet, daß**
die Stege (20 bis 28'), an denen sich die Sorptionsbehälter kontinuierlich vorbeibewegen, an axial verlaufenden festen Gehäuseteilen (19, 37) der koaxialen Gehäuse (11, 12) angeordnet sind und Lippen (36) tragen, die den Spalt zwischen dem Steg und dem jeweils angrenzenden Sorptionsbehälter (16) gegen einen Durchtritt des gasförmigen Wärmeträgermediums abdichten, wobei die Lippen sich bei sich fortbewegendem Sorptionsbehälter verbiegen, bis sie zurückschnappen und sich an dem Rand des nächstfolgenden Sorptionsbehälters anlegen.

2. Sorptionsvorrichtung zur Verwendung in einer Kühlanlage, einem Klimagerät, einer Wärmepumpe o.dgl.,
- mit mehreren langgestreckten Sorptionsbehältern (16), die über einen Teil ihrer Länge mit Sorptionsstoffen gefüllt sind und in diesem Teil eine Kocheradsorberzone bilden und deren anderer Teil der Länge eine Kondensatorverdampferzone bildet,
- mit mindestens zwei koaxialen Gehäusen (11, 12), in denen die Sorptionsbehälter achsparallel auf einer Kreisbahn rotierend angeordnet sind und sich dabei mit dem Kocheradsorberteil in dem einen Gehäuse und mit dem Kondensatorverdampferteil in einem anderen Gehäuse befinden,
- mit Einrichtungen zum Zuführen von gasförmigen Wärmeträgermedien, insbes. Luft an die Außenflächen der rotierenden Sorptionsbehälter (16) in jedem der Gehäuse,
- mit einer Einrichtung (40, 41) zum Erwärmen des gasförmigen Wärmeträgermediums in dem die Kocheradsorberteile der Sorptionsbehälter umschließenden Gehäuse, und
- mit zur Führung des Wärmeträgermediums dienenden, axial verlaufenden Stegen (20 bis 28'), die in den Gehäusen radial von außen nach innen und umgekehrt gerichtet vorgesehen sind und im wesentlichen bis an die äußere und die innere Kreisringbahn der Sorptionsbehälter (16) reichen und außen und innen gegeneinander versetzt sind,
**dadurch gekennzeichnet, daß**
die Stege (20 bis 28'), an denen sich die Sorptionsbehälter schrittweise vorbeibewegen, an axial verlaufenden festen Gehäuseteilen (19, 37) der koaxialen Gehäuse (11, 12) angeordnet sind und Lippen (36) tragen, die den Spalt zwischen dem Steg und dem jeweils angrenzenden Sortptionsbehälter (16) gegen einen Durchtritt des gasförmigen Wärmeträgermediums abdichten, wobei die Lippen sich bei sich fortbewegendem Sorptionsbehälter verbiegen, bis sie zurückschnappen und sich an dem Rand des nächstfolgenden Sorptionsbehälters anlegen

3. Sorptionsvorrichtung zur Verwendung in einer Kühlanlage, einem Klimagerät, einer Wärmepumpe o.dgl.,
- mit mehreren langgestreckten Sorptionsbehältern (16), die über einen Teil ihrer Länge mit Sorptionsstoffen gefüllt sind und in diesem Teil eine Kocheradsorberzone bilden und deren anderer Teil der Länge eine Kondensatorverdampferzone bildet,
- mit mindestens zwei koaxialen Gehäusen (11, 12), in denen die Sorptionsbehälter achsparallel auf einer Kreisbahn rotierend angeordnet sind und sich dabei mit dem Kocheradsorberteil in dem einen Gehäuse und mit dem Kondensatorverdampferteil in einem anderen Gehäuse befinden,
- mit Einrichtungen zum Zuführen von gasförmigen Wärmeträgermedien, insbes. Luft an die Außenflächen der rotierenden Sorptionsbehälter (16) in jedem der Gehäuse,
- mit einer Einrichtung (40, 41) zum Erwärmen des gasförmigen Wärmeträgermediums in dem die Kocheradsorberteile der Sorptionsbehälter umschließenden Gehäuse, und
- mit zur Führung des Wärmeträgermediums dienenden, axial verlaufenden Stegen (20 bis 28'), die in den Gehäusen radial von außen nach innen und umgekehrt gerichtet vorgesehen sind und im wesentlichen bis an die äußere und die innere Kreisringbahn der Sorptionsbehälter (16) reichen und außen und innen gegeneinander versetzt sind,
**dadurch gekennzeichnet, daß**
die Stege (20 bis 28') an jeweils einem koaxial zur gemeinsamen Drehachse der Sorptionsbehälter liegenden äußeren und inneren Ring (37', 19') angeordnet sind, wobei die Ringe derart begrenzt drehbeweglich sind, daß sie die Drehung der Sorptionsbehälter (16) mitvollziehen und nach einem dem Umfangsabstand zweier Sorptionsbehälter entsprechenden Weg sich zurückdrehen, und daß die Stege Lippen (36') tragen, die den Spalt zwischen dem Steg und dem jeweils angrenzenden Sortptionsbehälter (16) gegen einen Durchtritt des gasförmigen Wärmeträgermediums abdichten, derart, daß die Lippe beim Zurückdrehen der Ringe an dem jeweils nachfolgenden Sorptionsbehälter zur Anlage kommen.

4. Sorptionsvorrichtung nach Anspruch 1 oder 2, **dadurch gekennzeichnet, daß** zumindest die radial von außen nach innen gerichteten Stege (20 bis 24) als elastisch nachgiebige Lippen (36, 36') ausgebildet sind.

5. Sorptionsvorrichtung nach einem der vohergehenden Ansprüche, **dadurch gekennzeichnet, daß** die Lippen (36, 36') sowohl radial von außen nach innen wie auch radial von innen nach außen gerichtet sind.

6. Sorptionsvorrichtung nach einem der vohergehenden Ansprüche, **dadurch gekennzeichnet, daß** die Lippen in Gehäuseteilen (19, 19' 37, 37' 50) radial beweglich gelagert sind.

7. Sorptionsvorrichtung nach Anspruch 6, **dadurch gekennzeichnet, daß** die Lippen mechanisch, insbesondere durch Nockensteuerung, und/oder pneumatisch, insbesondere mittels eines Druckschlauches (52), und/oder elektromagnetisch verstellbar sind.

8. Sorptionsvorrichtung nach einem der vorhergehenden Ansprüche, **dadurch gekennzeichnet, daß** die Lippen von aufblasbaren, elastischen Schlauchdichtungen selbst gebildet sind.

9. Sorptionsvorrichtung nach einem der vorhergehenden Ansprüche 2-8, **dadurch gekennzeichnet, daß** die Lippen bei schrittweiser Bewegung der rotierenden Sorptionsbehälter in der Stillstandphase Begrenzungswänden des Rotors zugeordnet sind.

10. Sorptionsvorrichtung nach Anspruch 9, **dadurch gekennzeichnet, daß** die Begrenzungswände des Rotors Trennwände (33) zwischen den Sorptionsbehältern (16) sind.

11. Sorptionsvorrichtung nach Anspruch 9, **dadurch gekennzeichnet, daß** die Begrenzungswände des Rotors (50) von den Sorptionsbehältern (49) selbst gebildet sind.

12. Sorptionsvorrichtung nach einem der vorhergehenden Ansprüche 10 oder 11, **dadurch gekennzeichnet, daß** die Sorptionsbehälter (16) als an beiden Enden verschlossene Rohre (30) ausgebildet sind, die über ihre Länge verteilt mehrere radial ausgerichtete, flächige Rippen (31) tragen.

13. Sorptionsvorrichtung nach Anspruch 12, **dadurch gekennzeichnet, daß** die Rohre (30) einen zylindrischen Querschnitt aufweisen.

14. Sorptionsvorrichtung nach Anspruch 12, **dadurch gekennzeichnet, daß** die Rohre (30) einen ovalen Querschnitt aufweisen.

15. Sorptionsvorrichtung nach einem der vorhergehenden Ansprüche 12 bis 14, **dadurch gekennzeichnet, daß** jede Rippe (31) einen trapezförmigen Umriß aufweist und mit jeweils wenigstens einer Kante (32) an die Rippen (31) der benachbarten Sorptionsbehälter (16) angrenzt, um radial verlaufende Strömungskanäle für das gasförmige Wärmetauschermedium zu bilden.

16. Sorptionsvorrichtung nach einem der vorhergehenden Ansprüche 12 bis 15, **dadurch gekennzeichnet, daß** eine der radial zur gemeinsamen Drehachse der Sorptionsbehälter verlaufenden Kanten (32) der Rippen (31) um 90° abgewinkelt ist, um einen Flächenteil (33) zu bilden, der parallel zur Längsachse des jeweiligen Sorptionsbehälters (16) verläuft und in einer Ebene radial zur Drehachse der Sorptionsbehälter liegt.

17. Sorptionsvorrichtung nach Anspruch 16, **dadurch gekennzeichnet, daß** der abgewinkelte Flächenteil (33) einer Rippe (31) bis an die benachbarte Rippe desselben Sorptionsbehälters reicht und an deren abgewinkelte Kante (32) anschließt.

18. Sorptionsvorrichtung nach einem der vorhergehenden Ansprüche 12 bis 17, **dadurch gekennzeichnet, daß** die in Umfangsrichtung zur gemeinsamen Drehachse der Sorptionsbehälter (16) liegenden Kanten der Rippen (31) mit dem Radius dieser Drehachse abgerundet sind.

19. Sorptionsvorrichtung nach einem der vorhergehenden Ansprüche 12-18, **dadurch gekennzeichnet, daß** die Rohre (30) der Sorptionsbehälter (16) durchgehend längsverlaufend ausgebildet sind und im Bereich des einen Endes einen Kocheradsorberteil (16a) und im Bereich des anderen Endes einen Kondensatorverdampferteil (16b) aufweisen, die sich auf einer Kreisbahn in jeweils einem Gehäuse (11, 12) bewegen.

20. Sorptionsvorrichtung nach einem der vorhergehenden Ansprüche, **dadurch gekennzeichnet, daß** die in den Kocheradsorberteilen der Sorptionsbehälter (16) enthaltenen Sorptionsstoffe Zeolith und Wasser sind.

21. Sorptionsvorrichtung nach einem der vorhergehenden Ansprüche 12-20, **dadurch gekennzeichnet, daß** die Rohre (30) auf mehreren, insbesondere drei konzentrischen Kreisen nebeneinander angeordnet sind und sich infolgedessen auf Umlaufbahnen mit verschiedenen Radien bewegen.

22. Sorptionsvorrichtung nach Anspruch 21, **dadurch gekennzeichnet, daß** die Kocheradsorberteile (16a) und Kondensatorverdampferteile (16b) der konzentrisch zueinander angeordneten Kreise der Rohre (30) mit unterschiedlichen Salzen gefüllt sind.

23. Sorptionsvorrichtung nach Anspruch 21, **dadurch gekennzeichnet, daß** die Kocheradsorberteile (16a) und Kondensatorverdampferteile (16b) der konzentrisch zueinander angeordneten Kreise der Rohre (30) mit einer Mischung unterschiedlicher Salze gefüllt sind.

24. Sorptionsvorrichtung nach Anspruch 22, **dadurch gekennzeichnet, daß** die Kocheradsorberteile (16a) des äußeren Rohrkreises mit Manganchlorid, des mittleren Rohrkreises mit Strontiumchlorid und des inneren Rohrkreises mit Bariumchlorid gefüllt sind.

25. Sorptionsvorrichtung nach einem der vorhergehenden Ansprüche 22-24, **dadurch gekennzeichnet, daß** die Salzkristalle in ein Basismaterial eingelagert sind, insbesondere in Graphitmaterial.

26. Sorptionsvorrichtung nach einem der vorhergehenden Ansprüche 22-25, **dadurch gekennzeichnet, daß** die auf einem Kreis nebeneinander liegenden Kocheradsorberteile (16a) mit unterschiedlichen Salzen gefüllt sind.

27. Sorptionsvorrichtung nach Anspruch 2 und 26, **dadurch gekennzeichnet, daß** die Kocheradsorberteile (16a) nacheinander mit Manganchlorid, Strontiumchlorid und Bariumchlorid gefüllt sind und daß die Rohrgruppe schrittweise um die Rotorachse bewegbar ist.

28. Sorptionsvorrichtung nach einem der vorhergehenden Ansprüche, **dadurch gekennzeichnet, daß** die Gehäuse (11, 12) und die gemeinsame Drehachse der Sorptionsbehälter vertikal oder gegenüber der Vertikalen geneigt angeordnet sind, daß das die Kocheradsorberteile umschließende Gehäuse (12) unter dem die Kondensatorverdampferteile umschließenden Gehäuse (11) angeordnet ist und daß die Einrichtung zum Erwärmen des gasförmigen Wärmeträgermediums aus einem Heizrohr (40) besteht, das parallel zu den Sorptionsbehältern (16) außerhalb von deren Drehkreis angeordnet ist und von einem heißen Medium erhitzt wird.

29. Sorptionsvorrichtung nach Anspruch 28, **dadurch gekennzeichnet, daß** das Heizrohr (40) mit äußeren, zur Umlaufrichtung der Sorptionsbehälter parallel verlaufenden Rippen (41) versehen ist, über die die Wärme des Heizrohrs an das in dem Gehäuse strömende Wärmeträgermedium übertragen wird.

30. Sorptionsvorrichtung nach einem der vorhergehenden Ansprüche 28 und 29, **dadurch gekennzeichnet, daß** das Heizrohr als doppelwandiger, geschlossener Ringzylinder ausgebildet ist, der teilweise mit einem Wärmeträgermedium gefüllt ist.

31. Sorptionsvorrichtung nach einem der vorhergehenden Ansprüche 28 und 29, **dadurch gekennzeichnet, daß** das Heizrohr als Zylinderkörper (40) ausgebildet ist, der teilweise mit einem Wärmeträgermedium gefüllt ist.

32. Sorptionsvorrichtung nach einem der vorhergehenden Ansprüche 28 und 31, **dadurch gekennzeichnet, daß** das Wärmeträgermedium Wasser ist.

33. Sorptionsvorrichtung nach einem der vorhergehenden Ansprüche, **dadurch gekennzeichnet, daß** außerhalb der Gehäuse eine Anordnung (43) zum Erhitzen des zirkulierenden Wärmeträgermediums angeordnet ist.

34. Sorptionsvorrichtung nach Anspruch 30, **dadurch gekennzeichnet, daß** das das Heizrohr (40) erhitzende Medium ein das Heizrohr durchströmendes heißes Gas ist.

35. Sorptionsvorrichtung nach Anspruch 31, **dadurch gekennzeichnet, daß** das das Heizrohr erhitzende Medium ein das Heizrohr (40) an seiner Außenfläche umspülendes heißes Gas ist.

36. Sorptionsvorrichtung nach Anspruch 34 oder 35, **dadurch gekennzeichnet, daß** das Gas ein Verbrennungsgas ist.

37. Sorptionsvorrichtung nach einem der vorhergehenden Ansprüche 28-36, **dadurch gekennzeichnet, daß** am freien Ende des Heizrohres (40), angrenzend an die äußere Wand des die Kondensatorverdampferteile aufnehmenden Gehäuses (12) ein Brenner (43) angeordnet ist, dessen Brenngase das Heizrohr mit Wärme beaufschlagen.

38. Sorptionsvorrichtung nach Anspruch 37, **dadurch gekennzeichnet, daß** der Brenner (43) ein Gasbrenner ist.

39. Sorptionsvorrichtung nach Anspruch 37, **dadurch gekennzeichnet, daß** der Brenner (43) ein mit flüssigem Brennstoff betriebener Brenner ist.

40. Sorptionsvorrichtung nach Anspruch 39, **dadurch gekennzeichnet, daß** die Abgase des Brenners (43) vor dem Austritt in die Atmosphäre einen Wärmetauscher (42) durchströmen.

41. Sorptionsvorrichtung nach Anspruch 34 oder 35, **dadurch gekennzeichnet, daß** das das Heizrohr (40) durchströmende Gas das Abgas eines Verbrennungsmotors ist.

42. Sorptionsvorrichtung nach einem der vorhergehenden Ansprüche 21-41, **dadurch gekennzeichnet, daß** innerhalb der von den Rohrkreisen gebildeten umlaufenden Sorptionsbehälter (16) wenigsten vier auf dem Umfang verteilt angeordnete und zur Erzeugung einer gesteuerten Luftströmung dienende Querstromgebläse (44) vorgesehen sind.

43. Sorptionsvorrichtung nach einem der vorhergehenden Ansprüche, **dadurch gekennzeichnet, daß** ein um die Drehachse befindlicher Kern (51) der Sorptionsvorrichtung aus einer Aluminiumlegierung besteht und im radial nach außen gerichteten Bereich zumindest teilweise eine Wärmeisolierung aufweist.

## Claims

1. Sorption device for use in a cooling system, an air-conditioning apparatus, a heat pump or the like,
- having several elongate sorption containers (16) which are filled with sorption substances over one portion of their length and form a cooker adsorber region in that portion and of which the other portion of the length forms a condenser-evaporator region,
- having at least two coaxial housings (11, 12) in which the sorption containers are arranged in an axially parallel manner rotating on a circular path and are located with the cooker adsorber portion in the one housing and with the condenser-evaporator portion in another housing,
- having devices for supplying gaseous heat carrier media, especially air, to the outer faces of the rotating sorption containers (16) in each of the housings,
- having a device (40, 41) for heating the gaseous heat carrier medium in the housing surrounding the cooker adsorber portions of the sorption containers, and
- having axially extending fins (20 to 28') which are used to guide the heat carrier medium and are provided in the housings in such a manner that they are directed radially from the outside to the inside and vice versa and which reach substantially as far as the outer and the inner circular path of the sorption containers (16) and are offset relative to one another on the outside and the inside,
characterised in that the fins (20 to 28'), past which the sorption containers move continuously, are arranged on axially extending fixed housing portions (19, 37) of the coaxial housings (11, 12) and carry lips (36) which seal off the gap between the fin and the respective adjacent sorption container (16) against the passage of the gaseous heat carrier medium, the lips bending as the sorption container moves along until they snap back and rest against the edge of the following sorption container.

2. Sorption device for use in a cooling system, an air-conditioning apparatus, a heat pump or the like,
- having several elongate sorption containers (16) which are filled with sorption substances over one portion of their length and form a cooker adsorber region in that portion and of which the other portion of the length forms a condenser-evaporator region,
- having at least two coaxial housings (11, 12) in which the sorption containers are arranged in an axially parallel manner rotating on a circular path and are located with the cooker adsorber portion in the one housing and with the condenser-evaporator portion in another housing,
- having devices for supplying gaseous heat carrier media, especially air, to the outer faces of the rotating sorption containers (16) in each of the housings,
- having a device (40, 41) for heating the gaseous heat carrier medium in the housing surrounding the cooker adsorber portions of the sorption containers, and
- having axially extending fins (20 to 28') which are used to guide the heat carrier medium and are provided in the housings in such a manner that they are directed radially from the outside to the inside and vice versa and which reach substantially as far as the outer and the inner circular path of the sorption containers (16) and are offset relative to one another on the outside and the inside,
characterised in that the fins (20 to 28'), past which the sorption containers move stepwise, are arranged on axially extending fixed housing portions (19, 37) of the coaxial housings (11, 12) and carry lips (36) which seal off the gap between the fin and the respective adjacent sorption container (16) against the passage of the gaseous heat carrier medium, the lips bending as the sorption container moves along until they snap back and rest against the edge of the following sorption container.

3. Sorption device for use in a cooling system, an air-conditioning apparatus, a heat pump or the like,
- having several elongate sorption containers (16) which are filled with sorption substances over one portion of their length and form a cooker adsorber region in that portion and of which the other portion of the length forms a condenser-evaporator region,
- having at least two coaxial housings (11, 12) in which the sorption containers are arranged in an axially parallel manner rotating on a circular path and are located with the cooker adsorber portion in the one housing and with the condenser-evaporator portion in another housing,
- having devices for supplying gaseous heat carrier media, especially air, to the outer faces of the rotating sorption containers (16) in each of the housings,
- having a device (40, 41) for heating the gaseous heat carrier medium in the housing surrounding the cooker adsorber portions of the sorption containers, and
- having axially extending fins (20 to 28') which are used to guide the heat carrier medium and are provided in the housings in such a manner that they are directed radially from the outside to the inside and vice versa and which reach substantially as far as the outer and the inner circular path of the sorption containers (16) and are offset relative to one another on the outside and the inside,
characterised in that the fins (20 to 28') are each arranged on a respective outer or inner ring (37', 19') lying coaxially with the common axis of rotation of the sorption containers, the rings being rotationally movable to a limited extent in such a manner that they rotate with the sorption containers (16) and rotate back after travelling a path corresponding to the circumferential distance between two sorption containers, and in that the fins carry lips (36') which seal off the gap between the fin and the respective adjacent sorption container (16) against the passage of the gaseous heat carrier medium in such a manner that the lips come to rest against the respective following sorption container when the rings rotate back.

4. Sorption device according to claim 1 or 2, characterised in that at least the fins (20 to 24) directed radially from the outside to the inside are in the form of resiliently yielding lips (36, 36').

5. Sorption device according to any one of the preceding claims, characterised in that the lips (36, 36') are directed both radially from the outside to the inside and radially from the inside to the outside.

6. Sorption device according to any one of the preceding claims, characterised in that the lips are supported in a radially movable manner in housing portions (19, 19', 37, 37', 50).

7. Sorption device according to claim 6, characterised in that the lips are adjustable mechanically, especially by cam control, and/or pneumatically, especially by means of a flexible pressure tube (52), and/or electromagnetically.

8. Sorption device according to any one of the preceding claims, characterised in that the lips are formed by inflatable resilient flexible tube seals themselves.

9. Sorption device according to any one of the preceding claims 2 to 8, characterised in that, when the rotating sorption containers move stepwise, the lips are associated with delimiting walls of the rotor at the standstill stage.

10. Sorption device according to claim 9, characterised in that the delimiting walls of the rotor are separating walls (33) between the sorption containers (16).

11. Sorption device according to claim 9, characterised in that the delimiting walls of the rotor (50) are formed by the sorption containers (49) themselves.

12. Sorption device according to either of the preceding claims 10 and 11, characterised in that the sorption containers (16) are in the form of tubes (30) which are closed at both ends and which carry several radially oriented flat ribs (31) distributed over their length.

13. Sorption device according to claim 12, characterised in that the tubes (30) have a cylindrical cross-section.

14. Sorption device according to claim 12, characterised in that the tubes (30) have an oval cross-section.

15. Sorption device according to any one of the preceding claims 12 to 14, characterised in that each rib (31) has a trapezoidal contour and each adjoins the ribs (31) of the adjacent sorption containers (16) via at least one edge (32) in order to form radially extending flow ducts for the gaseous heat carrier medium.

16. Sorption device according to any one of the preceding claims 12 to 15, characterised in that one of those edges (32) of the ribs (31) which extend radially relative to the common axis of rotation of the sorption containers, is angled at 90° in order to form a flat portion (33) which extends parallel to the longitudinal axis of the respective sorption container (16) and lies in a plane radial to the axis of rotation of the sorption containers.

17. Sorption device according to claim 16, characterised in that the angled flat portion (33) of a rib (31) extends as far as the adjacent rib of the same sorption container and adjoins its angled edge (32).

18. Sorption device according to any one of the preceding claims 12 to 17, characterised in that those edges of the ribs (31) which lie in the circumferential direction relative to the common axis of rotation of the sorption containers (16) are rounded with the radius of that axis of rotation.

19. Sorption device according to any one of the preceding claims 12 to 18, characterised in that the tubes (30) of the sorption containers (16) are in a form such that they extend longitudinally throughout, and they have a cooker adsorber portion (16a) in the region of the one end and a condenser-evaporator portion (16b) in the region of the other end, each portion (16a and 16b) moving on a circular path in a respective housing (11, 12).

20. Sorption device according to any one of the preceding claims, characterised in that the sorption substances contained in the cooker adsorber portions of the sorption containers (16) are zeolite and water.

21. Sorption device according to any one of the preceding claims 12 to 20, characterised in that the tubes (30) are arranged next to one another on several, especially three, concentric circles and consequently move on circular paths having different radii.

22. Sorption device according to claim 21, characterised in that the cooker adsorber portions (16a) and condenser-evaporator portions (16b) of the mutually concentric circles of the tubes (30) are filled with different salts.

23. Sorption device according to claim 21, characterised in that the cooker adsorber portions (16a) and condenser-evaporator portions (16b) of the mutually concentric circles of the tubes (30) are filled with a mixture of different salts.

24. Sorption device according to claim 22, characterised in that the cooker adsorber portions (16a) of the outer tube circle are filled with manganese chloride, the cooker adsorber portions (16a) of the middle tube circle are filled with strontium chloride and the cooker adsorber portions (16a) of the inner tube circle are filled with barium chloride.

25. Sorption device according to any one of the preceding claims 22 to 24, characterised in that the salt crystals are embedded in a base material, especially in graphite material.

26. Sorption device according to any one of the preceding claims 22 to 25, characterised in that the cooker adsorber portions (16a) lying next to one another on a circle are filled with different salts.

27. Sorption device according to claims 2 and 26, characterised in that the cooker adsorber portions (16a) are filled in succession with manganese chloride, strontium chloride and barium chloride and in that the tube group is movable stepwise about the rotor shaft.

28. Sorption device according to any one of the preceding claims, characterised in that the housings (11, 12) and the common axis of rotation of the sorption containers are arranged upright or inclined relative to the vertical, in shat the housing (12) surrounding the cooker adsorber portions is arranged below the housing (11) surrounding the condenser-evaporator portions, and in that the device for heating the gaseous heat carrier medium comprises a heating tube (40) which is arranged parallel to the sorption containers (16) outside their rotation circle and which is heated by a hot medium.

29. Sorption device according to claim 28, characterised in that the heating tube (40) is provided with outer ribs (41) which extend parallel to the direction of rotation of the sorption containers and by means of which the heat of the heating tube is transferred to the heat carrier medium flowing in the housing.

30. Sorption device according to either of the preceding claims 28 and 29, characterised in that the heating tube is in the form of a double-walled closed annular cylinder which is partially filled with a heat carrier medium.

31. Sorption device according to either of the preceding claims 28 and 29, characterised in that the heating tube is in the form of a cylindrical body (40) which is partially filled with a heat carrier medium.

32. Sorption device according to either of the preceding claims 28 and 31, characterised in that the heat carrier medium is water.

33. Sorption device according to any one of the preceding claims, characterised in that an arrangement (43) for heating the circulating heat carrier medium is arranged outside the housings.

34. Sorption device according to claim 30, characterised in that the medium heating the heating tube (40) is a hot gas flowing through the heating tube.

35. Sorption device according to claim 31, characterised in that the medium heating the heating tube is a hot gas flowing around the heating tube (40) at its outer face.

36. Sorption device according to claim 34 or 35, characterised in that the gas is a combustion gas.

37. Sorption device according to any one of the preceding claims 28 to 36, characterised in that a burner (43), the combustion gases of which apply heat to the heating tube, is arranged at the free end of the heating tube (40), adjacent to the outer wall of the housing (12) accommodating the condenser-evaporator portions.

38. Sorption device according to claim 37, characterised in that the burner (43) is a gas burner.

39. Sorption device according to claim 37, characterised in that the burner (43) is a burner operated with liquid fuel.

40. Sorption device according to claim 39, characterised in that the exhaust gases of the burner (43) flow through a heat exchanger (42) before being discharged into the atmosphere.

41. Sorption device according to claim 34 or 35, characterised in that the gas flowing through the heating tube (40) is the exhaust gas of an internal combustion engine.

42. Sorption device according to any one of the preceding claims 21 to 41, characterised in that at least four transverse-flow fans (44) distributed over the circumference and used for generating a controlled airflow are provided inside the rotating sorption containers (16) formed by the tube circles.

43. Sorption device according to any one of the preceding claims, characterised in that a core (51) of the sorption device, which core is arranged around the axis of rotation, comprises an aluminium alloy and has at least partial heat insulation in the region directed radially outwards.

## Revendications

1. Dispositif de sorption pour utilisation dans une installation de refroidissement, une installation de climatisation, une pompe à chaleur ou analogue,
- avec une pluralité de récipients de sorption (16) allongés, remplis sur une partie de leur longueur par des substances de sorption et constituant dans cette partie une zone d'adsorption-ébullition et dans l'autre partie de la longueur constituent une zone formant évaporateur-condenseur,
- avec au moins deux carters (11, 12) coaxiaux, dans lesquels les récipients de sorption sont disposés parallèlement à l'axe en tournant sur une trajectoire circulaire et se trouvent alors avec la partie d'adsorption-ébullition située dans un premier carter et avec la partie formant évaporateur-condenseur située dans un autre carter,
- avec des dispositifs pour amener des fluides caloporteurs gazeux, en particulier de l'air, sur les surfaces extérieures des récipients de sorption (16) tournants, dans chacun des carters,
- avec un dispositif (40, 41) pour chauffer le milieu caloporteur gazeux dans le carter entourant les parties d'adsorption-ébullition des récipients de sorption, et
- avec des nervures (20 à 28') s'étendant axialement, servant au guidage du fluide caloporteur, qui sont prévues orientées radialement de l'extérieur vers l'intérieur et inversement, et arrivent sensiblement jusqu'à la trajectoire circulaire extérieure et intérieure des récipients de sorption (16) et sont décalées les unes par rapport aux autres extérieurement et intérieurement,
caractérisé en ce
les nervures (20 à 28'), sur lesquelles les récipients de sorption passent de façon continue, sont disposées sur des parties de carter (19, 37) stationnaires s'étendant axialement des carters (11, 12) coaxiaux et portent des lèvres (36) qui rendent étanche l'interstice constitué entre les nervures et le récipient de sorption (16) respectif limitrophe, pour empêcher tout passage du fluide caloporteur gazeux, les lèvres se déformant par flexion lorsque les récipients de sorption se déplacent, jusqu'à ce qu'elles reprennent leur forme et appuient sur le bord du récipient de sorption subséquent.

2. Dispositif de sorption pour utilisation dans une installation de refroidissement, une installation de climatisation, une pompe à chaleur ou analogue,
- avec une pluralité de récipients de sorption (16) allongés, remplis sur une partie de leur longueur par des substances de sorption et constituant dans cette partie une zone d'adsorption-ébullition et dans l'autre partie de la longueur constituent une zone formant évaporateur-condenseur,
- avec au moins deux carters (11, 12) coaxiaux, dans lesquels les récipients de sorption sont disposés parallèlement à l'axe en tournant sur une trajectoire circulaire et se trouvent alors avec la partie d'adsorption-ébullition située dans un premier carter et avec la partie formant évaporateur-condenseur située dans un autre carter,
- avec des dispositifs pour amener des fluides caloporteurs gazeux, en particulier de l'air, sur les surfaces extérieures des récipients de sorption (16) tournants, dans chacun des carters,
- avec un dispositif (40, 41) pour chauffer le milieu caloporteur gazeux dans le carter entourant les parties d'adsorption-ébullition des récipients de sorption, et
- avec des nervures (20 à 28') s'étendant axialement, servant au guidage du fluide caloporteur, qui sont prévues orientées radialement de l'extérieur vers l'intérieur et inversement, et arrivent sensiblement jusqu'à la trajectoire circulaire extérieure et intérieure des récipients de sorption (16) et sont décalées les unes par rapport aux autres extérieurement et intérieurement,
caractérisé en ce
les nervures (20 à 28'), sur lesquelles les récipients de sorption passent de façon pas à pas, sont disposées sur des parties de carter (19, 37) stationnaires s'étendant axialement des carters (11, 12) coaxiaux et portent des lèvres (36) qui rendent étanche l'interstice constitué entre les nervures et le récipient de sorption (16) respectif limitrophe, pour empêcher tout passage du fluide caloporteur gazeux, les lèvres se déformant par flexion lorsque les récipients de sorption se déplacent, jusqu'à ce qu'elles reprennent leur forme et appuient sur le bord du récipient de sorption subséquent.

3. Dispositif de sorption pour utilisation dans une installation de refroidissement, une installation de climatisation, une pompe à chaleur ou analogue,
- avec une pluralité de récipients de sorption (16) allongés, remplis sur une partie de leur longueur par des substances de sorption et constituant dans cette partie une zone d'adsorption-ébullition et dans l'autre partie de la longueur constituent une zone formant évaporateur-condenseur,
- avec au moins deux carters (11, 12) coaxiaux, dans lesquels les récipients de sorption sont disposés parallèlement à l'axe en tournant sur une trajectoire circulaire et se trouvent alors avec la partie d'adsorption-ébullition située dans un premier carter et avec la partie formant évaporateur-condenseur située dans un autre carter,
- avec des dispositifs pour amener des fluides caloporteurs gazeux, en particulier de l'air, sur les surfaces extérieures des récipients de sorption (16) tournants, dans chacun des carters,
- avec un dispositif (40, 41) pour chauffer le milieu caloporteur gazeux dans le carter entourant les parties d'adsorption-ébullition des récipients de sorption, et
- avec des nervures (20 à 28') s'étendant axialement, servant au guidage du fluide caloporteur, qui sont prévues orientées radialement de l'extérieur vers l'intérieur et inversement, et arrivent sensiblement jusqu'à la trajectoire circulaire extérieure et intérieure des récipients de sorption (16) et sont décalées les unes par rapport aux autres extérieurement et intérieurement,
caractérisé en ce
les nervures (20 à 28') sont disposées chaque fois sur un anneau extérieur et intérieur (37', 19') placé coaxialement par rapport à l'axe de rotation commun des récipients de sorption, les anneaux étant mobiles en rotation de façon limitée, de manière qu'ils exécutent conjointement en totalité la rotation des récipients de sorption (16) et que, après une course qui correspond à l'espacement périphérique entre deux récipients de sorption, ils reviennent en rotation inverse, et en ce que les anneaux portent des lèvres (36') qui rendent étanche l'interstice constitué entre la nervure et le récipient de sorption (16) respectif limitrophe, pour empêcher tout passage de fluide caloporteur gazeux, de manière que, lors de la rotation inverse des anneaux, la lèvre vienne en appui sur le récipient de sorption respectif suivant.

4. Dispositif de sorption selon la revendication 1 ou 2, caractérisé en ce qu'au moins les nervures (20 à 24) orientées radialement de l'extérieur vers l'intérieur sont réalisées sous la forme de lèvres (36, 36') à déformation élastique.

5. Dispositif de sorption selon l'une des revendications précédentes, caractérisé en ce que les lèvres (36, 36') sont orientées tant radialement de l'extérieur vers l'intérieur, qu'également radialement de l'intérieur vers l'extérieur.

6. Dispositif de sorption selon l'une des revendications précédentes, caractérisé en ce que les lèvres sont montées avec une mobilité radiale dans des parties de carter (19, 19' 37, 37', 50).

7. Dispositif de sorption selon la revendication 6, caractérisé en ce que les lèvres sont réglables de façon mécanique, en particulier par une commande à came, et/ou pneumatique, en particulier au moyen d'un tuyau à pression (52), et/ou de façon électromagnétique.

8. Dispositif de sorption selon l'une des revendications précédentes, caractérisé en ce que les lèvres sont constituées par des joints d'étanchéité à tuyau élastiques, gonflables, eux-mêmes.

9. Dispositif de sorption selon l'une des revendications 2-8 précédentes, caractérisé en ce que, lors du déplacement pas-à-pas des récipients de sorption en rotation, les lèvres sont associées à des parois de délimitation du rotor, dans la phase d'arrêt.

10. Dispositif de sorption selon la revendication 9, caractérisé en ce que les parois de délimitation du rotor sont des parois de séparation (33) entre les récipients de sorption (16).

11. Dispositif de sorption selon la revendication 9, caractérisé en ce que les parois de délimitation du rotor (50) sont constituées par les récipients de sorption (49) eux-mêmes.

12. Dispositif de sorption selon l'une des revendications 10 ou 11 précédentes, caractérisé en ce que les récipients de sorption (16) sont réalisés sous la forme de tubes (30) fermés aux deux extrémités, qui portent plusieurs nervures ou ailettes (31) plates orientées radialement, réparties sur leur longueur.

13. Dispositif de sorption selon la revendication 12, caractérisé en ce que les tubes (30) présentent une section transversale cylindrique.

14. Dispositif de sorption selon la revendication 12, caractérisé en ce que les tubes (30) présentent une section transversale ovale.

15. Dispositif de sorption selon l'une des revendications 12 à 14 précédentes, caractérisé en ce que chaque nervure ou ailette (31) a un contour trapézoïdal et est limitée chaque fois, par au moins une arête (32), sur les nervures (31) des récipients de sorption (16) voisins, pour constituer des canaux d'écoulement s'étendant radialement, pour le fluide caloporteur gazeux.

16. Dispositif de sorption selon l'une des revendications 12 à 15 précédentes, caractérisé en ce l'une des arêtes (32), s'étendant radialement par rapport à l'axe de rotation commun des récipients de sorption, des nervures (31) est repliée à 90° pour constituer une partie de surface (33) qui s'étend parallèlement à l'axe longitudinal du récipient de sorption (16) respectif et est placée dans un plan radialement par rapport à l'axe de rotation des récipients de sorption.

17. Dispositif de sorption selon la revendication 16, caractérisé en ce que la partie de surface (33) coudée d'une nervure (31) arrive jusqu'à la nervure voisine du même récipient de sorption et se raccorde à son arête (32) coudée.

18. Dispositif de sorption selon l'une des revendications 12 à 17 précédentes, caractérisé en ce les arêtes, situées dans la direction périphérique par rapport à l'axe de rotation commun des récipients de sorption (16), des nervures (31), sont arrondies au rayon de cet axe de rotation.

19. Dispositif de sorption selon l'une des revendications 12-18 précédentes, caractérisé en ce que les tubes (30) des récipients de sorption (16) sont réalisés de façon à s'étendre longitudinalement de façon continue et présentent, dans la zone d'une première extrémité, une partie d'adsorption-ébullition (16a) et dans la zone de l'autre extrémité une partie faisant évaporateur-condenseur (16b), qui se déplacent sur une trajectoire circulaire dans un carter respectif (11, 12).

20. Dispositif se sorption selon l'une des revendications précédentes, caractérisé en ce que les substances de sorption contenues dans les parties adsorption-ébullition des récipients de sorption (16) sont de la zéolite et de l'eau.

21. Dispositif de sorption selon l'une des revendications 12-20 précédentes, caractérisé en ce que les tubes (30) sont disposés les uns à côté des autres sur plusieurs, en particulier trois, cercles concentriques, et se déplacent suite à cela sur des trajectoires de circulation ayant des rayons différents.

22. Dispositif de sorption selon la revendication 21, caractérisé en ce que les parties d'adsorption-ébullition (16a) et les parties formant condenseur-évaporateur (16b) des cercles disposés concentriquement les uns aux autres des tubes (30) sont remplis avec des sels différents.

23. Dispositif de sorption selon la revendication 21, caractérisé en ce que les parties d'adsorption-ébullition (16a) et les parties formant condenseur-évaporateur (16b) des cercles disposés concentriquement entre eux des tubes (30) sont remplis d'un mélange de sels différents.

24. Dispositif de sorption selon la revendication 22, caractérisé en ce que les parties d'adsorption-ébullition (16a) du cercle de tubes extérieur sont remplies de chlorure de manganèse, celles du cercle de tubes médian sont remplies de chlorure de strontium et celles du cercle de tubes intérieur sont remplies de chlorure de baryum.

25. Dispositif de sorption selon l'une des revendications 22-24 précédentes, caractérisé en ce que les cristaux de sels sont noyés dans un matériau de base, en particulier dans du matériau à base de graphite.

26. Dispositif de sorption selon l'une des revendications 22-25 précédentes, caractérisé en ce que les parties d'adsorption-ébullition (16a) situées les unes à côté des autres sur un cercle sont remplies par des sels différents.

27. Dispositif de sorption selon les revendications 2 et 26, caractérisé en ce que les parties d'adsorption-ébullition (16a) sont remplies successivement de chlorure de manganèse, chlorure de strontium et chlorure de baryum, et en ce que le groupe de tubes est déplacable pas-à-pas autour de l'axe de rotation.

28. Dispositif de sorption selon l'une des revendications précédentes, caractérisé en ce que les carters (11, 12) et l'axe de rotation commun des récipients de sorption sont disposés verticalement ou inclinés par rapport à la verticale, en ce que le carter (12) entourant les parties d'adsorption-ébullition est disposée sous le carter (11) entourant les parties formant condenseur-évaporateur, et en ce que le dispositif de chauffage du fluide caloporteur gazeux est constitué d'un tube de chauffage (40), qui est disposé parallèlement aux récipients de sorption (16), à l'extérieur de son cercle de rotation, et est chauffé par un milieu chaud.

29. Dispositif de sorption selon la revendication 28, caractérisé en ce que le tube de chauffage (40) est doté de nervures ou ailettes (41) extérieures s'étendant parallèlement à la direction de circonférence des récipients de sorption, ailettes ou nervures par l'intermédiaire desquelles la chaleur du tube de chauffage est transmise au milieu caloporteur s'écoulant dans le carter.

30. Dispositif de sorption selon l'une des revendications 28 et 29 précédentes, caractérisé en ce que le tube de chauffage est réalisé sous la forme d'un cylindre annulaire fermé à double paroi, qui est rempli partiellement d'un fluide caloporteur.

31. Dispositif de sorption selon l'une des revendications 28 et 29 précédentes, caractérisé en ce que le tube de chauffage est réalisé sous la forme de corps cylindrique (40) rempli partiellement d'un fluide caloporteur.

32. Dispositif de sorption selon l'une des revendications 28 et 31 précédentes, caractérisé en ce que le fluide caloporteur est de l'eau.

33. Dispositif de sorption selon l'une des revendications précédentes, caractérisé en ce qu'un agencement (43) devant chauffer le fluide caloporteur en circulation est disposé à l'extérieur du carter.

34. Dispositif de sorption selon la revendication 30, caractérisé en ce que le milieu chauffant le tube de chauffage (40) est un gaz chaud dont l'écoulement traverse le tube de chauffage.

35. Dispositif de sorption selon la revendication 31, caractérisé en ce que le milieu chauffant le tube de chauffage (40) est un gaz chaud dont l'écoulement balaie la surface extérieure du tube de chauffage (40).

36. Dispositif de sorption selon la revendication 34 ou 35, caractérisé en ce que le gaz est un gaz de combustion.

37. Dispositif de sorption selon l'une des revendications 28-36 précédentes, caractérisé en ce qu'à l'extrémité libre du tube de chauffage (40), adjacent à la paroi extérieure du carter (12) logeant les parties formant condenseur-évaporateur est disposé un brûleur (43) dont les gaz de combustion sollicitent le tube de chauffage par de la chaleur.

38. Dispositif de sorption selon la revendication 37, caractérisé en ce que le brûleur (43) est un brûleur à gaz.

39. Dispositif de sorption selon la revendication 37, caractérisé en ce que le brûleur (43) est un brûleur fonctionnant avec un combustible liquide.

40. Dispositif de sorption selon la revendication 39, caractérisé en ce que les gaz d'échappement du brûleur (43) traversent un échangeur de chaleur (42) avant de sortir à l'atmosphère.

41. Dispositif de sorption selon la revendication 34 ou 35, caractérisé en ce que le gaz dont l'écoulement traverse le tube de chauffage (40) est constitué des gaz d'échappement d'un moteur à combustion interne.

42. Dispositif de sorption selon l'une des revendications 21-41 précédentes, caractérisé en ce qu'à l'intérieur du récipient de sorption (16) en circulation, constitué par les cercles de tubes, sont prévues au moins quatre soufflantes d'écoulement transversal (44), disposées réparties sur la périphérie et servant à générer un écoulement d'air commandé.

43. Dispositif de sorption selon l'une des revendications précédentes, caractérisé en ce qu'un noyau (51), se trouvant autour de l'axe de rotation, du dispositif de sorption est constitué d'un alliage d'aluminium et présente, au moins partiellement, une isolation thermique dans la zone tournée radialement vers l'extérieur.
